# EUROPÄISCHE PATENTSCHRIFT

(11) **EP 2 353 708 B1**
(45) Veröffentlichungstag und Bekanntmachung des Hinweises auf die Patenterteilung: **25.09.2013**
(21) Anmeldenummer: 11152540.8
(22) Anmeldetag: 28.01.2011
(51) Int. Cl.: B01J 2/26

(54) **Verfahren zur Bandkonditionierung bei Pastillieranlagen und Vorrichtung zum Herstellen von Pastillen**
Method for belt conditioning of tablet producing units and device for producing tablets
Procédé de conditionnement de bande dans des pastilleurs et dispositif de fabrication de pastilles

(30) Priorität: 02.02.2010 DE 102010007391
(43) Veröffentlichungstag der Anmeldung: 10.08.2011
(73) Patentinhaber: Sandvik Materials Technology Deutschland GmbH, 40549 Düsseldorf (DE)
(72) Erfinder: Schromm, Hans-Kurt, 71522 Backnang (DE); Kleinhans, Matthias, 71336 Waiblingen (DE)
(74) Vertreter: Patentanwälte Ruff, Wilhelm, Beier, Dauster & Partner

(56) Entgegenhaltungen:
- WO-A1-98/17385
- DE-A1- 2 030 026
- DE-A1-102005 054 462
- DE-C1- 4 322 628
- DE-C1- 4 332 686

## Beschreibung

Die Erfindung betrifft ein Verfahren zur Bandkonditionierung bei Pastillieranlagen mit einem um zwei Umlenktrommeln umlaufenden Stahlband, wobei eine Schmelze eines zu passierenden Produkts tropfenförmig auf das Stahlband aufgetragen wird, die Produkttropfen dann auf dem Stahlband verfestigen und anschließend das pastillierte Produkt vom Stahlband wieder abgenommen wird, wobei das Stahlband zwischen einem Ablagebereich, in dem das zu pastillierende Produkt tropfenförmig auf dem Stahlband abgelegt wird, und einem Abnahmebereich, in dem das pastillierte Produkt vom Stahlband abgenommen wird, wenigstens abschnittsweise in einem Abkühlbereich gekühlt wird. Die Erfindung betrifft auch eine Vorrichtung zum Herstellen von Pastillen.

Aus der deutschen Patentschrift DE 10 2005 054 462 B4 ist ein Verfahren zur Bandkonditionierung bei Pastillieranlagen bekannt, bei dem ein umlaufendes Stahlband durch Besprühen seiner Unterseite mit Kühlwasser gekühlt wird. Das Kühlwasser wird mittels Sprühdüsen von unten gegen das Stahlband gesprüht und das vom Stahlband abtropfende, erwärmte Kühlwasser wird in einem Sammelbehälter aufgefangen.

Die deutsche Patentschrift DE 43 22 628 C1 beschreibt ein Verfahren und eine Vorrichtung zum Herstellen von Pastillen, wobei die Umgebungsluft oberhalb eines Stahlbandes, auf das Produkttropfen abgelegt werden, kontinuierlich abgesaugt wird

Aus der deutschen Patentschrift DE 43 32 686 C1 ist ebenfalls ein Verfahren und eine Vorrichtung zum Herstellen von Pastillen bekannt, bei der die Umgebungsluft oberhalb eines Stahlbandes, auf das Produkttropfen abgelegt werden, kontinuierlich abgesaugt wird. Hierzu ist oberhalb des Stahlbandes eine Haube vorgesehen, die mit Heizelementen versehen ist.

Aus der deutschen Offenlegungsschrift DE 10 2005 054 462 A1 ist ein Verfahren und eine Vorrichtung zum Herstellen von Pastillen mit einem um zwei Umlenktrommeln umlaufenden Stahlband, mit einer rotierenden gelochten Außentrommel zum Ablegen einer Schmelze eines zu pastillierenden Produkts tropfenförmig auf dem Stahlband, wobei die Produkttropfen dann auf dem Stahlband verfestigen, und mit einem Abnahmemesser bekannt, um anschließend das pastillierte Produkt vom Stahlband wieder abzunehmen. Eine Kühlvorrichtung zum Kühlen des Stahlbandes ist in einem Abkühlbereich zwischen einem Ablagebereich, in dem das zu pastillierende Produkt mittels der Außentrommel tropfenförmig auf dem Stahlband abgelegt wird, und einem Abnahmebereich, in dem das pastillierte Produkt mittels des Abnahmemessers vom Stahlband abgenommen wird, vorgesehen. Zwischen der stromaufwärts gelegenen Umlenktrommel und der stromabwärts gelegenen Umlenktrommel wird das Stahlband abgekühlt. Die stromabwärts gelegene Umlenktrommel kann mit einer Heizvorrichtung versehen sein und es kann auch vorgesehen sein, das Untertrum des Stahlbandes mittels Heizvorrichtungen aufzuwärmen, um dieses dadurch vollständig abzutrocknen.

Mit der Erfindung sollen ein Verfahren und eine Vorrichtung zum Pastillieren bereitgestellt werden, mit dem sich insbesondere bei hygroskopischen Produkten eine verbesserte Pastillenqualität erzielen lässt.

Erfindungsgemäß ist hierzu bei einem Verfahren zur Bandkonditionierung bei Pastillieranlagen mit einem um zwei Umlenktrommeln umlaufenden Stahlband, wobei eine Schmelze eines zu pastillierenden Produkts tropfenförmig auf das Stahlband aufgetragen wird, die Produkttropfen dann auf dem Stahlband verfestigen und anschließend das pastillierte Produkt vom Stahlband wieder abgenommen wird, wobei das Stahlband zwischen einem Ablagebereich, in dem das zu pastillierende Produkt tropfenförmig auf dem Stahlband abgelegt wird, und einem Abnahmebereich, in dem das pastillierte Produkt vom Stahlband abgenommen wird, wenigstens abschnittsweise in einem Abkühlbereich gekühlt wird, vorgesehen, dass das Stahlband in einem Nachheizbereich unmittelbar stromaufwärts des Abnahmebereichs beheizt wird.

Überraschenderweise hat sich herausgestellt, dass das Nachheizen des Stahlbandes folgend auf einen Abkühlbereich die Pastillenqualität verbessern kann. Durch Nachheizen des Stahlbandes wird eine übermäßige Feuchtigkeitsaufnahme der Pastillen und auch ein Feuchtigkeitsniederschlag auf dem Stahlband verhindert. Der Feuchtigkeitsgehalt der Pastillen kann dadurch genauer kontrolliert werden und deren Qualität wird verbessert. An und für sich widerspricht das Beheizen des Stahlbandes stromabwärts des Abkühlbereichs dem Grundgedanken von Pastillierverfahren, dass nämlich eine heiße Schmelze eines zu pastillierenden Produkts tropfenförmig auf ein Stahlband aufgetragen wird und dann die Produkttropfen im Verlaufe ihres Transports auf dem Stahlband abkühlen und dadurch verfestigen. Um eine solche Verfestigung zu erreichen, muss nämlich das Stahlband gekühlt werden, wozu üblicherweise von unten her Sprühdüsen Kühlwasser auf das Stahlband sprühen. Geradezu gegenläufig erscheint dann das Nachheizen des Stahlbandes. Wie bereits ausgeführt wurde, lässt sich durch Vorsehen eines solchen Nachheizbereiches aber die Pastillenqualität verbessern. Das erfindungsgemäße Verfahren kann beispielsweise für die Pastillierung von Harnstoff und Harnstoff-Mischungen oder Schwefel verwendet werden.

In Weiterbildung der Erfindung wird eine am Abnahmebereich angeordnete Umlenktrommel beheizt.

Auch durch diese Maßnahme kann ein Nachheizbereich bereitgestellt werden, der sich dann auch noch über einen Teil des Umfangs der am Abnahmebereich angeordneten Umlenktrommel erstreckt.

In Weiterbildung der Erfindung wird das Stahlband im Nachheizbereich auf eine Temperatur oberhalb des Taupunkts der Umgebungsluft beheizt.

Auf diese Weise kann eine Kondensation von in der Umgebungsluft enthaltenem Wasserdampf auf dem Stahlband sowie auch auf den Pastillen verhindert werden.

In Weiterbildung der Erfindung wird das Stahlband im Nachheizbereich auf eine Temperatur oberhalb der Feuchtigkeitsgleichgewichtstemperatur des pastillierten Produkts beheizt.

Mit Feuchtigkeitsgleichgewichtstemperatur ist eine Temperatur gemeint, unterhalb derer das pastillierte Produkt Feuchtigkeit aus der Umgebung aufnimmt und oberhalb derer das pastillierte Produkt Feuchtigkeit abgibt. Diese Feuchtigkeitsgleichgewichtstemperatur eines Produktes ist abhängig von der Luftfeuchtigkeit und der Temperatur der Umgebungsluft, so dass sich eine Feuchtigkeitsgleichgewichtskennlinie bzw. ein Feuchtigkeitsgleichgewichtskennfeld ergibt, das auch als Equilibrium bezeichnet wird. Beispielsweise kann Harnstoff mittels des erfindungsgemäßen Verfahrens pastilliert werden. Harnstoff ist hygroskopisch, nimmt also Feuchtigkeit aus der Umgebung auf. In trockener Umgebung aber kann Feuchtigkeit aus der Harnstoffpastille auch wieder an die Umgebung abgegeben werden, je nach der Temperatur der Pastille sowie Lufttemperatur und Luftfeuchtigkeit. Gemäß dem erfindungsgemäßen Verfahren wird das Stahlband und auch die auf dem Stahlband aufliegende Pastille damit im Nachheizbereich auf eine Temperatur aufgeheizt, bei der die Harnstoffpastille Feuchtigkeit an die Umgebung abgibt. Auf diese Weise kann verhindert werden, dass die Pastillen im Abnahmebereich zu feucht sind und möglicherweise nach dem Abnehmen vom Stahlband aneinander kleben bleiben.

In Weiterbildung der Erfindung wird die Umgebungsluft oberhalb des Stahlbandes kontinuierlich abgesaugt.

Dadurch kann eventuell oberhalb des Stahlbandes befindliche feuchte Luft abgesaugt werden, durch eine leichte Luftströmung kann aber auch eine Kondensation auf den Pastillen bzw. auf dem Stahlband verringert oder verhindert werden. Gerade im Nachheizbereich ist ein Absaugen der Luft oberhalb des Stahlbandes vorteilhaft, um die von den Pastillen abgegebene Feuchtigkeit zu entfernen.

In Weiterbildung der Erfindung wird eine Unterseite des Stahlbandes im Abkühlbereich mit Kühlwasser beaufschlagt und eine Unterseite des Stahlbandes im Nachheizbereich wird mit dem im Abkühlbereich des Stahlbandes aufgeheizten Kühlwasser beaufschlagt.

Durch diese Maßnahmen ist ein sehr energiesparender Betrieb möglich, da die Abwärme des Stahlbandes für den Nachheizbereich genutzt wird.

In Weiterbildung der Erfindung wird eine Unterseite des Stahlbandes im Abkühlbereich mit Kühlwasser beaufschlagt und eine am Abnahmebereich angeordnete Umlenktrommel wird mittels des im Abkühlbereich aufgeheizten Kühlwassers beheizt.

Auch dadurch kann Energie eingespart werden, da die Umlenktrommel über die Abwärme des Stahlbandes beheizt wird.

Das der Erfindung zugrunde liegende Problem wird auch durch eine Vorrichtung zum Pastillieren von Produkten mit einem um zwei Umlenktrommeln umlaufenden Stahlband mit einer rotierenden gelochten Außentrommel zum Ablegen einer Schmelze eines zu pastillierenden Produkts tropfenförmig auf dem Stahlband, wobei die Produkttropfen dann auf dem Stahlband verfestigen, und mit einem Abnahmemesser gelöst, um anschließend das pastillierte Produkt vom Stahlband wieder abzunehmen, wobei eine Kühlvorrichtung zum Kühlen des Stahlbandes in einem Abkühlbereich zwischen einem Ablagebereich, in dem das zu pastillierende Produkt mittels der Außentrommel tropfenförmig auf dem Stahlband abgelegt wird, und einem Abnahmebereich, in dem das pastillierte Produkt mittels des Abnahmemessers vom Stahlband abgenommen wird, vorgesehen ist, wobei bei der erfindungsgemäßen Vorrichtung eine erste Heizvorrichtung zum Beheizen des Stahlbandes in einem Nachheizbereich unmittelbar stromaufwärts des Abnahmebereichs vorgesehen ist.

Das Vorsehen einer Heizvorrichtung zum Beheizen des Stahlbandes in einem Nachheizbereich erlaubt es überraschenderweise, die Pastillenqualität zu verbessern. Nach dem Auftragen der Produktschmelze sollen die Produkttropfen kontrolliert verfestigen. Das Vorsehen eines Nachheizbereichs ist damit an und für sich gegenläufig. Es erlaubt aber, eine Kondensation der Umgebungsluft zu verringern und dadurch eine verbesserte Pastillenqualität zu erhalten.

In Weiterbildung der Erfindung ist eine zweite Heizvorrichtung zum Beheizen einer am Abnahmebereich angeordneten Umlenktrommel vorgesehen.

Auch das Beheizen der am Abnahmebereich angeordneten Umlenktrommel verbessert die Pastillenqualität, indem der Nachheizbereich bis auf den Umfang der Umlenktrommel verlängert wird und dadurch eine Kondensation bis hin zum Abnahmebereich, in dem üblicherweise ein Abnahmemesser angeordnet ist, vermieden wird.

In Weiterbildung der Erfindung ist die Kühlvorrichtung zum Kühlen des Stahlbandes zur Verwendung von Kühlwasser ausgebildet und die erste und/oder die zweite Heizeinrichtung sind zur Verwendung des mittels der Kühlvorrichtung aufgeheizten Kühlwasser ausgebildet.

Auf diese Weise kann die erste und/oder die zweite Heizvorrichtung in energiesparender Weise mit der Abwärme der Kühlvorrichtung betrieben werden.

In Weiterbildung der Erfindung weist die Kühlvorrichtung einen Sammelbehälter für die aufgeheiztes Kühlwasser auf und die erste und/oder die zweite Heizeinrichtung stehen in Strömungsverbindung mit dem Sammelbehälter.

Das Anschließen der ersten und/oder zweiten Heizeinrichtung an den Sammelbehlälter erlaubt in sehr einfacher Weise die Nutzung der Abwärme der Kühlvorrichtung.

In Weiterbildung der Erfindung ist der Sammelbehälter mit einer Zusatzheizung versehen.

Durch Vorsehen einer Zusatzheizung kann bereits beim Anfahren der erfindungsgemäßen Vorrichtung ein Nachheizen im Nachheizbereich erreicht werden, wenn also das Kühlwasser der Kühlvorrichtung noch nicht ausreichend aufgeheizt ist, um den Nachheizbereich mit Abwärme zu versorgen.

In Weiterbildung der Erfindung ist eine Regeleinheit mit Temperatursensoren zum Regeln einer Kühlwassertemperatur in der Kühlvorrichtung, der ersten und/oder der zweiten Heizeinrichtung vorgesehen.

Durch Regelung der betreffenden Temperaturen lassen sich konstante Verhältnisse und damit eine sehr gute Pastillenqualität erzielen.

In Weiterbildurig der Erfindung ist eine Regeleinheit mit Temperatursenstoren zum Regeln einer Stahtbandtemperatur im Abkühlbereich und im Nachheizbereich vorgesehen.

Indem unmittelbar die Stahtbandtemperatur überwacht und geregelt wird, lässt sich eine noch genauere Einstellung der Stahlbandtemperatur und damit auch der Pastillentemperatur erzielen, was der Pastillenqualität zugute kommt. Eine Regeleinheit kann sowohl die Kühlwassertemperatur als auch die Stahlbandtemperatur erfassen und regeln.

In Weiterbildung der Erfindung ist das Stahlband wenigstens zwischen dem Ablagebereich und dem Abnahmebereich mit einer Haube versehen und es ist wenigstens ein Gebläse zum Absaugen von Luft aus der Haube vorgesehen.

Das Absaugen von Luft ermöglicht es, einen Feuchtigkeitsniederschlag auf die Pastillen zu verringern oder ganz zu verhindern.

Weitere Merkmale und Vorteile der Erfindung ergeben sich aus den Ansprüchen und der nachfolgenden Beschreibung einer bevorzugten Ausführungsform der Erfindung im Zusammenhang der Zeichnung. In der Zeichnung zeigt:

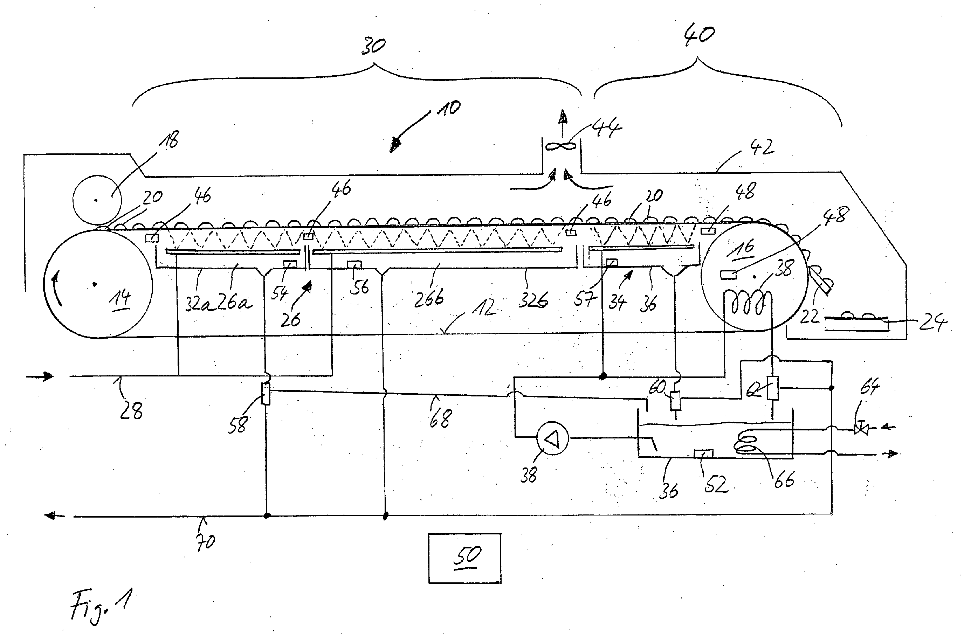

- Fig. 1: eine schematische Darstellung einer erfindungsgemaßen Vorrichtung zum Pastillieren von Produkten.

In der einzigen Figur ist eine erfindungsgemäße Vorrichtung 10 zum Pastillieren von Produkte, speziell hygroskopischen Produkten wie Harnstoff, dargestellt. Die Vorrichtung 10 weist ein umlaufendes Stahl~ band 12 auf, das über zwei Umlenktrommeln14, 16 geführt ist. Die beiden Umlenktrommeln14, 16 können sich jeweils im Uhrzeigersinn drehen und die jeweiligen Drehachsen sind auf gleicher Höhe angeordnet, so dass das Untertrum und das Obertrum des Stahlbandes 12 horizontal verlaufen.

Oberhalb der in Fig. 1 linken Umlenktrommel 14 ist eine ebenfalls rotierende, gelochte Außentrommel 18 vorgesehen. Einem nicht dargestellten Innenkörper der gelochten Außentrommel 18 wird eine Harnstoff∼ schmelze zugeführt und von innen her gegen die gelochte Außentrommel 18 gedrückt, Die Hamstoffschmeize wird dadurch durch die Öffnungen in der gelochten Außentrommel 18 gedrückt und in Form von Produkttropfen 20 auf dem Obertrum des Stahlbandes 12 abgelegt, Die Produkttropfen 20 werden dann zusammen mit einer Bewegung des Stahlbandes weiter transportiert und verfestigen im Verlauf des Transports auf dem Stahlband. Im Bereich der in der Darstellung der Fig. 1 rechten Umlenktrommel 16 werden die verfestigten Pastillen dann mittels eines Abnahmemessers 22 vom Stahlband 12 abgenommen und auf ein Transportband 24 weitergeleitet. Mit dem Transportband 24 kön∼ nen die Pastillen dann beispielsweise zu einer Verpackungsstation abtransportiert werden,
Um eine Verfestigung der Produkttropfen 20 zu erreichen, ist eine Kühlvorrichturig 26 vorgesehen, die einen ersten Abschnitt 26a und einen zweiten Abschnitt 26b aufweist. Die Kühlvorrichtung 26 weist mehrere Sprühdüsen auf, die über eine Kühlwasserzuführleitung 28 mit Kühlwasser gespeist werden und dieses Kühlwasser gegen eine Unterseite des Obertrums des Stahlbandes 12 sprühen. Oberhalb der Abschnitte 26a, 26b ist somit ein Abkühlbereich 30 angeordnet, in dem den auf dem Stahlband aufliegenden Produkttropfen 20 Wärme entzogen wird, so dass diese während des Transports auf dem Stahlband 12 durch den Kühlbereich 30 verfestigen. Um eine wirksame Abkühlung zu gewähr∼ leisten, werden sowohl die Sprühdüsen des ersten Abschnitts 26a als auch die Sprühdüsen des zweiten Abschnitts 26b der Kühlvorrichtung 26 mit Kühlwasser aus der Kühlwasserzufuhrleitung 28 versorgt, so dass also das mit den Sprühdüsen gegen das Stahlband 12 gesprühte Kühlwasser im Abschnitt 26a und im Abschnitt 26b gleich kalt ist. Der zweite Abschnitt 26b ist länger als der erste Abschnitt 26a und weist annähernd die doppelte Länge des ersten Abschnitts 26a auf. Das von der Unterseite des Stahlbandes 12 wieder abtropfende Kühlwasser wird im ersten Abschnitt 26a mittels eines ersten Auffangbehälters 32a und im zweiten Abschnitt 26b mittels eines zweiten Auffangbehälters 32b aufgefangen.

In Bewegungsrichtung des Obertrums des Stahlbandes 12 ist stromabwärts des zweiten Abschnitts 26b der Kühlvorrichtung 26 eine erste Heizvorrichtung 34 vorgesehen. Die Heizvorrichtung 34 ist im wesentlichen gleich wie die Abschnitte 26a, 26b der Kühlvorrichtung 26 aufgebaut und weist mehrere Sprühdüsen auf, die Wasser gegen eine Unterseite des Obertrums des Stahlbandes 12 sprühen. Die Sprühdüsen der Heizvorrichtung 34 werden mit aufgeheiztem Kühlwasser aus einem Sammelbehälter 36 versorgt, das mittels einer Pumpe 38 den Sprühdüsen der Heizvorrichtung 34 zugeführt wird. Das von der Unterseite des Stahlbandes 12 abtropfende Kühlwasser wird im Bereich der Heizvorrichtung 34 in einem dritten Auffangbehälter 36 aufgefangen.

Innerhalb der Umlenktrommel 16 ist eine zweite Heizvorrichtung 38 angeordnet, die schematisch mittels einer Heizwendel dargestellt ist. Die zweite Heizvorrichtung 38 wird ebenfalls mit aufgeheiztem Kühlwasser aus dem Sammelbehälter 36 versorgt, das mittels der Pumpe 38 über Leitungen sowohl zu den Sprühdüsen der ersten Heizvorrichtung 34 als auch zu der Heizwendel der zweiten Heizvorrichtung38 befördert wird. Oberhalb der Heizvorrichtung 34 und auf dem Abschnitt des Umfangs der Umlenktrommel 16 bis zum Abnahmemesser 32 ist dadurch ein Nachheizbereich 40 definiert. In dem Nachheizbereich 40 werden das Stahlband 12 und somit die auf ihm aufliegenden, bereits verfestigten Pastillen beheizt. Das Stahlband 12 wird im Nachheizbereich 40 mittels der ersten Heizvorrichtung 34 und der zweiten Heizvorrichtung 38 auf eine Temperatur aufgeheizt, die oberhalb des Taupunkts der Umgebungstuft liegt. Dadurch kann im Nachheizbereich 40 ein Feuchtigkeitsniederschlag auf dem Stahlband 12 und damit auch auf den verfestigten Pastillen verhindert werden. Die Temperatur, auf die das Stahlband 12 im Nachheizbereich 40 aufgeheizt wird, ist dabei so gewählt, dass die Pastillen oder verfestigten Produkttropfen 20 im Nachheizbereich 40 auf eine Temperatur oberhalb des Equilibriums des pastillierten Produkts, speziell Harnstoff, aufgeheizt werden oder dass eine solche Temperatur gehalten wird. Mit Equilibrium wird eine Gleichgewichtskennlinie bezeichnet, oberhalb der hygroskopische Produkte Feuchtigkeit an die Umgebung abgeben, unterhalb derer Feuchtigkeit aus der Umgebung aufgenommen wird. Diese Gleichgewichtskennlinie ist von den Umgebungsbedingungen, also der Temperatur und der Feuchtigkeit der Umgebungsluft abhängig. Indem die Pastillen im Nachheizbereich 40 eine Temperatur oberhalb ihrer Feuchtigkeitsgleichgewichtstemperatur haben, können diese im Nachheizbereich noch Feuchtigkeit an die Umgebungsluft abgeben. Dadurch kann erreicht werden, dass gerade die Au-βenfäche der Pastillen beim Abnehmen trocken ist und dadurch auch ein Verkleben der Pastillen auf dem Transportband 24 sowie bei der nachfolgenden Verpackung und/oder Lagerung nicht zu befürchten ist.

Um die von den Pastillen im Nachheizbereich 40 abgegebene Feuchtigkeit abzutransportieren, ist die Vorrichtung 10 mit einer Haube 42 versehen, aus der mittels eines Gebläses 44 Luft abgesaugt wird.

Um die Temperaturen des Stahlbandes 12 sowohl im Kühlbereich 30 als auch im Nachheizbereich 40 zu Überwachen und zu regeln, sind Temperatursensoren 46, 48 und eine Regeleinheit 50 vorgesehen. Signalleitungen zwischen den Temperatursensoren 46, 48 und der Regeleinheit 50 sind der Übersichtlichkeit halber in Fig. 1 nicht dargestellt. Weiter erhält die Regeleinheit 50 Eingangssignale von einem Temperatursensor 52, der im Sammelbehälter 36 angeordnet ist sowie von Temperatursensoren 54 und 56, die im Auffangbehälter 32a bzw. dem Auffangbehälter 32b der Kühlvorrichtung 26 angeordnet sind. Weiter kann die Regeleinheit 50 Dreiwegeventile 58, 60 und 62 sowie ein Absperrventil 64 steuern, um geeignete Kühlwassertemperaturen in den Heizvorrichtungen 34, 38 im Nachheizbereich 40 einzustellen und zu regeln. Signalleitungen zwischen den Dreiwegeventilen 58, 60, 62 sowie dem Absperrventil 64 und der Regeleinheit 50 sind der Übersichtlichkeit halber nicht dargestellt.

Der Sammelbehälter 36 ist mit einer dritten Heizvorrichtung 66 versehen, die mittels einer Heizwendel 66 schematisch dargestellt ist. Die Heizwendel 66 kann mittels des Absperrventils 64 mit warmem Wasser beaufschlagt werden. Beim Anlauf der Vorrichtung 10 wird mittels der Heizwendel 66 das Kühlwasser im Sammelbehälter 36 auf eine Temperatur aufgeheizt, die geeignet ist, um im Nachheizbereich 40 eine geeignete Temperatur des Stahlbandes 12 sowie der Produkttropfen 20 einzustellen, wie vorstehend erörtert wurde. Im laufenden Betrieb der Vorrichtung 10 wird die Heizwendel 66 in der Regel nicht benötigt, da dann die Abwärme der Kühlvorrichtung26 ausreicht, um die erste Heizvorrichtung 34 und die zweite Heizvorrichtung 38 zu betreiben.

Das im ersten Abschnitt 26a der Kühlvorrichtung 26 gegen die Unterseite des Stahlbandes 12 gesprühte Kühlwasser wird in dem Auffangbehälter 32a gesammelt und gelangt von dort über eine Ablaufleitung zu dem Dreiwegeventil 58. Je nach Einstellung des Dreiwegeventils 58 wird das Kühlwasser aus dem Auffangbehälter 32a über eine Leitung 68 in den Sammelbehälter 36 oder zu einer Rücklaufleitung 70 geleitet.

Das im Abschnitt 26b der Kühlvorrichtung 26 gegen die Unterseite des Stahlbandes 12 gesprühte Kühlwasser wird im Auffangbehälter 32b gesammelt und über eine Ablaufleitung unmittelbar zur Rücklaufleitung 70 zurückgeführt. In nicht dargestellter Weise kann ein weiteres Dreiwegeventil vorgesehen sein, um auch Kühlwasser aus dem Auffangbehälter 32b in den Sammelbehälter 36 zu leiten. Darüber hinaus kann auch die Zuführleitung 28 mit einem Dreiwegeventil versehen sein, um wahlweise kaltes Kühlwasser aus der Zuführleitung 28 in den Sammelbehälter 36 zu leiten. Ob solche weiteren Leitungen und Dreiwegeventile vorgesehen werden, hängt von den vorgesehenen Produktionsbedingungen ab, ob also die Temperatur im Sammelbehälter 36 auf den gewünschten Werten gehalten werden kann.

Die Sprühdüsen der Heizvorrichtung 34 werden mittels einer Pumpe 38 mit Kühlwasser aus dem Sammelbehälter 36 versorgt. Wie bereits ausgeführt wurde, wird beim Anlauf der Vorrichtung 10 das Kühlwasser im Sammelbehälter 36 mittels der Heizwendel 66 aufgeheizt. Im Betrieb der Vorrichtung 10 gelangt das im ersten Abschnitt 26a der Kühlvorrichtung 26 aufgeheizte Kühlwasser über das Dreiwegeventil 58 und die Leitung 68 in den Sammelbehälter 36 und wird von dort dann mittels der Pumpe 38 den Sprühdüsen der ersten Heizvorrichtung 34 zugeführt. Über die Pumpe 38 wird auch die zweite Heizvorrichtung 38 innerhalb der Umlenktrommel 16 mit aufgeheiztem Kühlwasser versorgt.

Das von den Sprühdüsen der ersten Heizvorrichtung 34 gegen die Unterseite des Stahlbandes 12 gesprühte Kühlwasser wird im Auffangbehälter 36 gesammelt und gelangt über eine Ablaufleitung zum Dreiwegeventil 60. Mittels des Dreiwegeventils 60 kann eingestellt werden, ob das aufgeheizte Kühlwasser aus dem Auffangbehälter 36 wieder in den Sammelbehälter 36 gelangt oder unmittelbar in die Ablaufleitung 70 geführt wird. Erkennt die Regeleinheit 50, dass die Wassertemperatur im Sammelbehälter 36 zu niedrig ist, wird sie das Dreiwegeventil 60 so einstellen, dass das Kühlwasser von der ersten Heizvorrichtung 34 wieder in den Sammelbehälter 36 gelangt, um das darin befindliche Kühlwasser weiter aufzuheizen. Steigt die Kühlwassertemperatur im Sammelbehälter 36 an, wird das Dreiwegeventil 60 so eingestellt, dass das Kühlwasser von der ersten Heizvorrichtung 34 unmittelbar in die Rücklaufleitung 70 geführt wird.

In ähnlicher Weise kann mittels des Dreiwegeventils 62 das von der zweiten Heizvorrichtung 38 kommende Kühlwasser entweder in den Sammelbehälter 36 oder unmittelbar in die Rücklaufleitung 70 geleitet werden.

Mit der erfindurigsgemäßenVorrichtung ist somit ein sehr energiesparender Betrieb möglich,indem die erste Heizvorrichtung 34 und die zweite Heizvorrichtung 38 mit der Abwärme der Kühlvorrichtung 26 betrieben werden.

## Patentansprüche

1. Verfahren zur Bandkonditionierung bei Pastillieranlagen mit einem um zwei Umlenktrommeln (14, 16) umlaufenden Stahlband (12), wobei eine Schmelze eines zu pastillierenden Produkts tropfenförmig auf das Stahlband (12) aufgetragen wird, die Produkttropfen (20) dann auf dem Stahlband (12) verfestigen und anschließend das pastillierte Produkt vom Stahlband (12) wieder abgenommen wird, wobei das Stahlband (12) zwischen einem Ablagebereich, in dem das zu pastillierende Produkt tropfenförmig auf dem Stahlband (12) abgelegt wird, und einem Abnahmebereich, in dem das pastillierte Produkt vom Stahlband (12) abgenommen wird, wenigstens abschnittsweise in einem Abkühlbereich (30) gekühlt wird, **dadurch gekennzeichnet, dass** das Stahlband (12) in einem Nachheizbereich (40) unmittelbar stromaufwärts einer am Abnahmebereich angeordneten Umlenktrommel (16) beheizt wird.

2. Verfahren nach Anspruch 1, dadurch gekennzeichet, dass die am Abnahmebereich angeordnete Umlenktrommel (16) beheizt wird.

3. Verfahren nach Anspruch 1, **dadurch gekennzeichnet, dass** das Stahlband (12) im Nachheizbereich (40) auf eine Temperatur oberhalb des Taupunkts der Umgebungsluft beheizt wird.

4. Verfahren nach Anspruch 1 oder 2, **dadurch gekennzeichnet, dass** das Stahlband (12) im Nachheizbereich (40) auf eine Temperatur oberhalb der Feuchtigkeitsgleichgewichttemperatur des pastillierten Produkts beheizt wird.

5. Verfahren nach einem der vorstehenden Ansprüche, **dadurch gekennzeichnet, dass** Umgebungsluft oberhalb des Stahlbandes (12) kontinuierlich abgesaugt wird.

6. Verfahren nach einem der vorstehenden Ansprüche, **dadurch gekennzeichnet, dass** eine Unterseite des Stahlbandes (12) im Abkühlbereich (30) mit Kühlwasser beaufschlagt wird und dass eine Unterseite des Stahlbandes (12) im Nachheizbereich (40) mit dem im Abkühlbereich des Stahlbandes (12) aufgeheizten Kühlwasser beaufschlagt wird.

7. Verfahren nach einem der vorstehenden Ansprüche, **dadurch gekennzeichnet, dass** eine Unterseite des Stahlbandes (12) im Abkühlbereich (30) mit Kühlwasser beaufschlagt wird und dass eine am Abnahmebereich angeordnete Umlenktrommel (16) mittels des im Abkühlberecch (30) aufgeheizten Kühlwassers beheizt wird.

8. Vorrichtung zum Herstellen von Pastillen mit einem um zwei Umlenktrommeln (14, 16) umlaufenden Stahlband (12) mit einer rotierenden, gelochten Außentrommel (18) zum Ablegen einer Schmelze eines zu pastillierenden Produkts tropfenförmig auf dem Stahlband (12), wobei die Produkttropfen (20) dann auf dem Stahlband (12) verfestigen, und mit einem Abnahmemesser (22), um anschließend das pastillierte Produkt vom Stahlband (12) wieder abzunehmen, wobei eine Kühlvorrichtung (26) zum Kühlen des Stahlbandes (12) in einem Abkühlbereich (30) zwischen einem Ablagebereich, in dem das zu pastillierende Produkt mittels der Außentrommel (18) tropfenförmig auf dem Stahlband (12) abgelegt wird, und einem Abnahmebereich, in dem das pastillierte Produkt mittels des Abnahmemessers (22) vom Stahlband (12) abgenommen wird, vorgesehen ist, **dadurch gekennzeichnet, dass** eine erste Heizvorrichtung (34) zum Beheizen des Stahlbandes (12) in einem Nachheizbereich (40) unmittelbar stromaufwärts einer am Abnahmebereich angeordneten Umlenktrommel (16) vorgesehen ist.

9. Vorrichtung nach Anspruch 8, **dadurch gekennzeichnet, dass** eine zweite Heizvorrichtung (38) zum Beheizen der am Abnahmebereich angeordneten Umlenktrommel (16) vorgesehen ist.

10. Vorrichtung nach Anspruch 8 oder 9, **dadurch gekennzeichnet, dass** die Kühlvorrichtung (26) zum Kühlern des Stahlbandes (12) zur Verwendung von Kühlwasser ausgebildet ist, und dass die erste und/oder die zweite Heizeinrichtung (34, 38) zur Verwendung des mittels der Kühlvorrichtung (26) aufgeheizten Kühlwassers ausgebildet ist.

11. Vorrichtung nach Anspruch 10, **dadurch gekennzeichnet, dass** ein Sammelbehälter (36) für mittels der Kühlvorrichtung (26) aufgeheiztes Kühlwasser vorgesehen ist und dass die erste und/oder die zweite Heizeinrichtung (34, 38) in Strömungsverbindung mit dem Sammelbehälter (36) stehen.

12. Vorrichtung nach Anspruch 11, **dadurch gekennzeichnet, dass** der Sammelbehälter (36) mit einer Zusatzheizung (66) versehen ist.

13. Vorrichtung nach einem der Ansprüche 8 bis 12, **dadurch gekennzeichnet, dass** eine Regeleinheit (50) mit Temperatursensoren (46, 48, 52, 54, 56, 57) zum Regeln einer Kühlwassertemperatur in der Kühlvorrichtung (26), der ersten und/oder der zweiten Heizeinrichtung (34, 38) vorgesehen ist.

14. Vorrichtung nach einem der Ansprüche 8 bis 13, **dadurch gekennzeichnet, dass** eine Regeleinheit (50) mit Temperatursensoren (46, 48, 52, 54, 56, 57) zum Regeln einer Temperatur des Stahlbands (12) im Abkühlbereich (30) und im Nachheizbereich (40) vorgesehen ist.

15. Vorrichtung nach einem der Ansprüche 8 bis 14, **dadurch gekennzeichnet, dass** das Stahlband (12) wenigstens zwischen dem Ablagerbereich und dem Abnahmebereich mit einer Haube (42) versehen ist, und dass wenigstens ein Gebläse (44) zum Absaugen von Luft aus der Haube (42) vorgesehen ist.

## Claims

1. A method for belt conditioning in pastillating systems comprising a steel belt (12) circulating around two return drums (14, 16), wherein a melt of a product to be pastillated is deposited in the form of drops on said steel belt (12), which drops of product (20) then solidify on said steel belt (12) and subsequently the pastillated product is removed from said steel belt (12), and said steel belt (12) is cooled, at least partially, in a cooling region (30) situated between a depositing region, in which the product to be pastillated is deposited in the form of drops on said steel belt (12), and a removal region, in which the pastillated product is removed from said steel belt (12), **characterized in that** said steel belt (12) is heated in a reheating region (40) disposed directly upstream of a return drum (16) arranged at said removal region.

2. The method according to claim 1, **characterized in that** the return drum (16) disposed in said removal region is heated.

3. The method according to claim 1, **characterized in that** said steel belt (12) is heated in the reheating region (40) to a temperature above the dew point of the ambient air.

4. The method according to claim 1 or 2, **characterized in that** said steel belt (12) is heated in the reheating region (40) to a temperature above the moisture equilibrium point of the pastillated product.

5. The method according to any one of the preceding claims, **characterized in that** ambient air above said steel belt (12) is continuously extracted.

6. The method according to any one of the preceding claims, **characterized in that** to an underside of said steel belt (12) in the cooling region (30) cooling water is applied and that to an underside of said steel belt (12) in the reheating region (40) cooling water is applied that has been heated up in the cooling region of said steel belt (12).

7. The method according to any one of the preceding claims, **characterized in that** to an underside of said steel belt (12) in the cooling region (30) cooling water is applied and that a return drum (16) disposed in said removal region is heated by means of cooling water that has been heated up in said cooling region (30).

8. A device for producing pastilles by means of a steel belt (12) circulating around two return drums (14, 16) comprising a rotary perforated outer drum (18) for depositing a melt of a product to be pastillated in the form of drops on said steel belt (12), which drops of product (20) then solidify on said steel belt (12), and a stripping knife (22) to subsequently remove the pastillated product from said steel belt (12), a cooling device (26) being provided for cooling said steel belt (12) in a cooling region (30) between a depositing region, in which the product to be pastillated is deposited by means of the outer drum (18) in the form of drops on said steel belt (12), and a removal region, in which the pastillated product is removed from said steel belt (12) by means of the stripping knife (22), **characterized in that** a first heating device (34) for heating said steel belt (12) is provided in a reheating region (40) disposed directly upstream of a return drum (16) disposed at said removal region.

9. The device according to claim 8, **characterized in that** a second heating device (38) is provided for heating the return drum (16) disposed in said removal region.

10. The device according to claim 8 or 9, **characterized in that** said cooling device (26) for cooling said steel belt (12) is adapted for the use of cooling water, and that said first and/or second heating devices (34, 38) are adapted for the use of cooling water that has been heated by means of said cooling device (26).

11. The device according to claim 10, **characterized in that** a collecting trough (36) is provided for the cooling water that has been heated by means of said cooling device (26) and that said first and/or second heating devices (34, 38) are in fluid communication with said collecting trough (36).

12. The device according to claim 11, **characterized in that** said collecting trough (36) is provided with booster heating means (66).

13. The device according to any one of the claims 8 to 12, **characterized in that** a regulating unit (50) is provided that includes temperature sensors (46, 48, 52, 54, 56, 57) for regulating the temperature of the cooling water in said cooling device (26), in said first and/or second heating devices (34, 38).

14. The device according to any one of the claims 8 to 13, **characterized in that** a regulating unit (50) is provided that includes temperature sensors (46, 48, 52, 54, 56, 57) for regulating a temperature of the steel belt (12) in said cooling region (30) and in said reheating region (40).

15. The device according to any one of the claims 8 to 14, **characterized in that** said steel belt (12) is provided with a hood (42) at least between said depositing region and said removal region and that at least one ventilator (44) is provided for extracting air from said hood (42).

## Revendications

1. Procédé de conditionnement sur bande pour installations de pelletisation qui présentent une bande d'acier (12) qui entoure deux tambours de renvoi (14, 16), dans lequel
un produit fondu à pelletiser est appliqué en gouttes sur la bande d'acier (12),
les gouttes (20) de produit se solidifient ensuite sur la bande d'acier (12) et le produit pelletisé est ensuite retiré de la bande d'acier (12),
au moins certaines zones de la bande d'acier (12) sont refroidies dans une zone de refroidissement (30) entre une zone de dépôt dans laquelle le produit à pelletiser est déposé en gouttes sur la bande d'acier (12) et une zone d'enlèvement dans laquelle le produit pelletisé est retiré de la bande d'acier (12),
**caractérisé en ce que**
la bande d'acier (12) est chauffée dans une zone de post-chauffage (40) située directement en amont d'un tambour de renvoi (16) disposé dans la zone d'enlèvement.

2. Procédé selon la revendication 1, **caractérisé en ce que** le tambour de renvoi (16) disposé dans la zone d'enlèvement est chauffé.

3. Procédé selon la revendication 1, **caractérisé en ce que** la bande d'acier (12) est chauffée dans la zone de post-chauffage (40) à une température supérieure au point de rosée de l'air ambiant.

4. Procédé selon les revendications 1 ou 2, **caractérisé en ce que** la bande d'acier (12) est chauffée dans la zone de post-chauffage (40) à une température supérieure à la température d'équilibre d'humidité du produit à pelletiser.

5. Procédé selon l'une des revendications précédentes, **caractérisé en ce que** l'air ambiant est aspiré en continu au-dessus de la bande d'acier (12).

6. Procédé selon l'une des revendications précédentes, **caractérisé en ce que** de l'eau de refroidissement est appliquée dans la zone de refroidissement (30) sur la face inférieure de la bande d'acier (12) et **en ce que** de l'eau de refroidissement chauffée dans la zone de refroidissement de la bande d'acier (12) est appliquée dans la zone de post-chauffage (40) sur la face inférieure de la bande d'acier (12).

7. Procédé selon l'une des revendications précédentes, **caractérisé en ce que** de l'eau de refroidissement est appliquée dans la zone de refroidissement (30) sur la face inférieure de la bande d'acier (12) et **en ce qu'**un tambour de renvoi (16) disposé dans la zone d'enlèvement est chauffé au moyen d'eau de refroidissement chauffée dans la zone de refroidissement (30).

8. Dispositif de fabrication de pellets, présentant
une bande d'acier (12) tournant autour de deux tambours de renvoi (14, 16) et un tambour extérieur (18) rotatif et perforé permettant de déposer sur la bande d'acier (12) des gouttes d'un produit fondu à pelletiser, les gouttes (20) de produit se solidifiant ensuite sur la bande d'acier (12), et
une lame d'enlèvement (22) qui retire ensuite de la bande d'acier (12) le produit pelletisé,
un dispositif de refroidissement (26) étant prévu pour refroidir la bande d'acier (12) dans une zone de refroidissement (30) située entre une zone de dépôt dans laquelle le produit à pelletiser est déposé en gouttes sur la bande d'acier (12) au moyen du tambour extérieur (18) et une zone d'enlèvement dans laquelle le produit pelletisé est retiré de la bande d'acier (12) au moyen de la lame d'enlèvement (22), **caractérisé en ce que**
un premier dispositif de chauffage (34) qui chauffe la bande d'acier (12) est prévu dans une zone de post-chauffage (40) située immédiatement en amont d'un tambour de renvoi (16) disposé dans la zone d'enlèvement.

9. Dispositif selon la revendication 8, **caractérisé en ce qu'**un deuxième dispositif de chauffage (38) est prévu pour chauffer le tambour de renvoi (16) disposé dans la zone d'enlèvement.

10. Dispositif selon les revendications 8 ou 9, **caractérisé en ce que** le dispositif de refroidissement (26) prévu pour refroidir la bande d'acier (12) est configuré pour utiliser de l'eau de refroidissement et **en ce que** le premier et/ou le deuxième dispositif de chauffage (34, 38) sont configurés pour utiliser l'eau de refroidissement chauffée au moyen du dispositif de refroidissement (26).

11. Dispositif selon la revendication 10, **caractérisé en ce qu'**un récipient de collecte (36) est prévu pour reprendre l'eau de refroidissement chauffée au moyen du dispositif de refroidissement (26) et **en ce que** le premier et/ou le deuxième dispositif de chauffage (34, 38) sont en communication d'écoulement avec un récipient de collecte (36).

12. Dispositif selon la revendication 11, **caractérisé en ce que** le récipient de collecte (36) est doté d'un chauffage d'appoint (66).

13. Dispositif selon l'une des revendications 8 à 12, **caractérisé en ce qu'**il présente une unité de régulation (50) dotée de sondes de température (46, 48, 52, 54, 56, 57) pour réguler la température de l'eau de refroidissement dans le dispositif de refroidissement (26) et le premier et/ou le deuxième dispositif de chauffage (34, 38).

14. Dispositif selon l'une des revendications 8 à 13, **caractérisé en ce qu'**il présente une unité de régulation (50) dotée de sondes de température (46, 48, 52, 54, 56, 57) pour réguler la température de la bande d'acier (12) dans la zone de refroidissement (30) et dans la zone de post-chauffage (40).

15. Dispositif selon l'une des revendications 8 à 14, **caractérisé en ce que** la bande d'acier (12) est dotée d'un capot (42) au moins entre la zone de dépôt et la zone d'enlèvement et **en ce qu'**au moins un ventilateur (44) est prévu pour aspirer l'air hors du capot (42).
